Europäisches Patentamt

European Patent Office

Office européen des brevets

(19)

(11) **EP 0 483 303 B1**

(12) **EUROPÄISCHE PATENTSCHRIFT**

(45) Veröffentlichungstag und Bekanntmachung des Hinweises auf die Patenterteilung:
**03.01.1996 Patentblatt 1996/01**

(21) Anmeldenummer: **91907551.5**

(22) Anmeldetag: **22.04.1991**

(51) Int Cl.⁶: $G01N\ 27/417$, $F02D\ 41/14$

(86) Internationale Anmeldenummer:
**PCT/CH91/00092**

(87) Internationale Veröffentlichungsnummer:
**WO 91/17434 (14.11.1991 Gazette 1991/26)**

(54) **REGELUNG DES LUFTVERHÄLTNISSES IN EINEM HEISSEN ABGASSTROM UND SAUERSTOFFSONDE DAZU**

PROCESS FOR CONTROLLING THE PROPORTION OF AIR IN A HOT EXHAUST-GAS STREAM, AND OXYGEN PROBE FOR USE IN THE PROCESS

REGULATION DE LA PROPORTION D'AIR DANS UN COURANT CHAUD DE GAZ D'ECHAPPEMENT ET SONDE A OXYGENE UTILISEE A CETTE FIN

(84) Benannte Vertragsstaaten:
**AT BE CH DE DK ES FR GB IT LI NL SE**

(30) Priorität: **27.04.1990 CH 1444/90**

(43) Veröffentlichungstag der Anmeldung:
**06.05.1992 Patentblatt 1992/19**

(73) Patentinhaber: **TEZET-Service AG**
**CH-8184 Bachenbülach (CH)**

(72) Erfinder: **LEISTRITZ, Klaus**
**CH-8437 Zurzach (CH)**

(74) Vertreter: **Breiter, Heinz et al**
**CH-8413 Neftenbach-Zürich (CH)**

(56) Entgegenhaltungen:
**DE-A- 3 305 706        DE-A- 3 743 295**
**FR-A- 2 520 943        US-A- 4 055 792**
**US-A- 4 096 050**

- **PATENT ABSTRACTS OF JAPAN vol. 5, no. 80 (M-70) 26 Mai 1981, & JP-A-56 027 831**
- **PATENT ABSTRACTS OF JAPAN vol. 9, no. 120 (P-358) 24 Mai 1985, & JP-A-60 004 850**
- **PATENT ABSTRACTS OF JAPAN vol. 10, no. 344 (P-518) 04 Juli 1986, & JP-A-61 147 146**

Printed by Jouve, 75001 PARIS (FR)

## Beschreibung

Die Erfindung bezieht sich auf ein Verfahren zur Regelung des Luft-Treibstoffgemisches in einem Ottomotor mit wenigstens einem Zylinder, insbesondere in einem Automobilmotor, zum optimalen Einsatz eines Katalysators mit einer Sonde, welche der Bestimmung des Luftverhältnisses in einem heissen Abgasstrom mit Kohlenmonoxid, Stickoxiden und Kohlenwasserstoffen dient, wobei die Messignale der Sonde mit einer Elektronik in Steuersignale für Zündung und Gemischaufbereitung umgewandelt werden. Weiter bezieht sich die Erfindung auf eine Vorrichtung zur Durchführung des Verfahrens.

Ein Ottomotor, ein Motor mit einem Fremdzünder, z.B. ein Automobilbenzinmotor, ein stationärer Benzinmotor oder ein Zweitaktbenzinmotor, erzeugt im wesentlichen Kohlendioxid, aber auch Kohlenmonoxid, Stickoxide und Kohlenwasserstoffe, welche an die Umgebung abgegeben werden. Während es sich beim Kohlenmonoxid und bei den Stickoxiden um chemisch definierte Verbindungen handelt, umfassen die Kohlenwasserstoffe eine grosse Anzahl von Verbindungen.

Insbesondere bei Automobilmotoren werden heute zunehmend strenge Abgasnormen aufgestellt, welche nur geringe Restmengen an den erwähnten schädlichen Gasen zulassen. Bei der Abgasreinigungstechnologie von mit Benzin betriebenen Ottomotoren spielen über eine Lambda-Sonde gesteuerte Katalysatoren eine zentrale Rolle, insbesondere Dreiwege-Katalysatoren, länderspezifisch jedoch auch Oxidations- und/oder Doppelbett-Katalysatoren. In einer Reihe von chemischen Reaktionen werden beispielsweise im Dreiwege-Katalysator die schädlichen Abgaskomponenten, insbesondere auch die heterogenen Kohlenwasserstoffe, mit einem Wirkungsgrad von etwa 90% zu Wasser, Kohlendioxid, Stickstoff und Wasserstoff umgesetzt.

Die gleichzeitige Reaktion der schädlichen Abgase Kohlenmonoxid, Stickoxide und Kohlenwasserstoffe setzt voraus, dass ein Verhältnis des Luft-Treibstoffgemisches um den stöchiometrischen Wert $\lambda = 1$ in engen Grenzen eingehalten wird. Lambda wird auch als Luftverhältnis bezeichnet:

$$\lambda = \frac{\text{zugeführte Luftmenge}}{\text{theoretischer Luftbedarf}}$$

Bei $\lambda < 1$ spricht man von einem fetten, bei $\lambda > 1$ von einem mageren Gemisch.

Eine Lambda-Sonde gibt ein Spannungssignal an eine elektronische Steuerung ab, die ihrerseits einem Gemischbildner signalisiert, ob das Gemisch angefettet oder abgemagert werden soll. Die Aenderung des Luft-Treibstoffgemisches darf jedoch nicht sprunghaft erfolgen, ein Integrator ändert die Gemischzusammensetzung und allenfalls den Zündzeitpunkt langsam über eine Zeitfunktion. So schwankt das Luft-Treibstoffgemisch auch im optimalen Betrieb ständig wenige Prozent um $\lambda = 1$.

Nach dem heutigen Stand der Technik sind Lambda-Sonden etwa 1m strömungsabwärts hinter dem Auspuffkrümmer, bei mehrzylindrigen Motoren im Sammelrohr, in Strömungsrichtung der Abgase vor dem Katalysator, angeordnet.

Eine Lambda-Sonde arbeitet nach dem Prinzip einer galvanischen Sauerstoffkonzentrationszelle mit einem Festkörperelektrolyten aus Zirkondioxid, das mit Yttriumoxid stabilisiert ist. Der Festkörperelektrolyt ist mit einem Metallgestrick - auch Metallkorb genannt - geschützt, das die Wucht des heissen Abgasstroms dämpft. Die Aussenfläche des Festkörperelektrolyten wird vom Abgas umspült, während der innere offene Raum mit der Aussenluft als Referenzgas in Verbindung steht.

Trotz ihrer offensichtlichen Vorteile weist eine Lambda-Sonde auch Nachteile auf:

- Sie arbeitet erst ab Temperaturen von etwa 400°C. Während der kritischen Zeit bis zur Erwärmung des Katalysators wird das Luft-Treibstoffgemisch nicht geregelt oder die Lambda-Sonde muss vorgeheizt werden.

- Die maximale Dauerbetriebstemperatur liegt bei etwa 800°C. Die Sonde muss in Strömungsrichtung relativ weit hinten, in einem kühleren Bereich im Sammelrohr, angebracht werden.

- Die Lambda-Sonde hat eine Ansprechzeit von 50 bis 100 msec, was zusammen mit der langen Totzeit des Abgases bis zum Erreichen der Sonde eine für hochtourig drehende Motoren sehr lange Reaktionszeit ergibt.

- Die mit einem Metallgestrick bzw. einem Metallkorb versehene Lambda-Sonde hat einen hohen Wirkungsquerschnitt und stört deshalb den Abgasstrom stark.

In der CH-A5 666 724 wird eine Lambda-Sonde beschrieben, welche einen aus dem Abgasstrom zurückgezogenen Festkörperelektrolyten hat. Die auf einer rohrförmigen Halterung aufgesetzte Lambda-Sonde wird wohl weniger rasch überhitzt und stört den Abgasstrom nicht, durch die Rückversetzung wird sie jedoch in bezug auf die Reaktionszeit noch träger, der ungehindert durchfliessende Abgasstrom umspült den Festkörperelektrolyten nicht mehr direkt, sondern erst nach dem Durchtritt eines abgezweigten Teilstroms durch eine verhältnismässig kleine Oeffnung.

Die DE,C1 3743295 soll vermeiden, dass beim Kaltstart auf eine beheizte Lambda-Sonde auftreffende Flüssigkeitströpfchen die Sondenkeramik zerstören können. Auch soll die Repräsentanz der von der Lambda-Sonde abgegeben Signale verbessert werden. Dazu wird stromauf der Lambda-Sonde ein Gasablenkblech derart angeordnet, dass die Lambda-Sonde im Strömungsschatten liegt. Die mit einem verhältnismässig grossen Korb geschützte Lambda-Sonde an sich bekannter Bauart ist im Sammelrohr der Auspuffanlage angeordnet und erfasst einen Teil des gesamten Abgasstromes aller Zylinder in einem Bereich mit schon verhältnismässig niedriger Gastemperatur.

Der vorliegenden Erfindung liegt die Aufgabe zugrunde, ein Verfahren der eingangs genannten Art und eine Vorrichtung zu dessen Durchführung zu schaffen, welche eine selektivere Motorsteuerung mit wesentlich schneller als die bisher üblich ansprechenden Sonden und zugeordneter Steuerelektronik erlauben.

In bezug auf das Verfahren wird die Aufgabe erfindungsgemäss dadurch gelöst, dass der Sauerstoffgehalt des Abgasstroms im Verbrennungsraum der Zylinder, nach dem Austrittsventil in den Zylinderköpfen, oder in den Einzelrohren gemessen wird, im Schutzbereich einer glatten, aerodynamischen Ablenkeinrichtung mit einer resistiven keramischen Sauerstoffsonde einer Wärmebeständigkeit bis etwa 1300°C und einer Einstellzeit im Millisekundenbereich ohne Vergleichsatmosphäre gemessen wird. Spezielle und weiterbildende Ausführungsformen sind Gegenstand von abhängigen Patentansprüchen.

Die im zylinderselektiven Abgasstrom angeordnete Ablenkeinrichtung erfüllt gleichzeitig mehrere Funktionen:

- Sie bildet einen Hitzeschild für die Sauerstoffsonde, welcher vor der direkten Einwirkung der explosionsartig erzeugten und mit hoher Geschwindigkeit abfliessenden Abgase sehr hoher Temperatur schützt. Die in bezug auf die Strömungsrichtung der Abgase stromab wenigstens teilweise offene Ablenkeinrichtung gewährleistet jedoch, dass die Sonde stets direkt und unvermischt von einem Teil des Abgasstroms umspült ist. Mit einer in einer vollständig oder weitgehend geschlossenen Ablenkeinrichtung angeordneten Sauerstoffsonde würde der Vorteil einer schnellen Ansprechzeit wenigstens teilweise wieder aufgehoben, ähnlich wie mit einer Anordnung der Sonde gemäss der CH-A5 666724.

- Die metallische Ablenkeinrichtung entzieht dem im Abgasstrom gelegenen Schutzbereich für die Sauerstoffsonde Wärme und leitet diese nach aussen ab. Dadurch wird der Hitzeschutz weiter verbessert.

- Der Abgasstrom wird dank der kleinen Dimensionen der Sonde durch die klein ausgebildete, glatte, aerodynamische Ablenkeinrichtung auch in Einzelrohren nur unwesentlich gestört und beeinträchtigt daher den Wirkungsgrad des Motors nicht oder nur unmerklich.

Eine übliche Lambda-Sonde mit notwendigem Schutzkorb könnte aus rein geometrischen Gründen nicht in einem Einzelrohr angeordnet werden und würde trotz Ablenkblech die hohen Temperaturen des erfindungsgemässen Verfahrens niemals aushalten.

Vorzugsweise wird der Sauerstoffgehalt erfindungsgemäss mit einer Einstellzeit von 1 bis 20 msec, vorzugsweise 3 bis 15 msec, gemessen. Mit einer Ansprechzeit der resistiven Sauerstoffsonde von wenigen Millisekunden kann selbst bei hochtourigen Motoren, beispielsweise von 6000 Umdrehungen pro Minute, das Luft-Treibstoffgemisch jedes einzelnen Kolbenhubes gemessen und eingestellt werden. Für dynamische Fahrsituationen, insbesondere bei der Beschleunigung, kann mit nachgeschaltetem Katalysator der Treibstoffverbrauch und damit die Emission von schädlichen Abgasen auf ein Minimum beschränkt werden. Dies ist in erster Linie in der Kaltstartphase von grosser Bedeutung, während welcher eine kurze Ansprechzeit wesentlich ist.

Die hohe Wärmebeständigkeit des ohne Vergleichsatmosphäre arbeitenden Sauerstoffsensors erlaubt im Zusammenwirken mit der glatten, aerodynamischen Ablenkvorrichtung, dass der Sauerstoffgehalt im Verbrennungsraum der Zylinder, nach dem Austrittsventil in den Zylinderköpfen oder in den Einzelrohren des Auspuffsystems gemessen werden kann. Von besonderem praktischem Interesse ist die Messung des Sauerstoffverhältnisses unmittelbar nach der Eintrittsöffnung eines Einzelrohrs der Auspuffanlage. Erst diese, ausserhalb des Wirkungsbereichs von herkömmlichen Lambda-Sonden liegenden Messpositionen erlauben eine zylinderselektive Steuerung, also die Optimierung der Verbrennung in jeden Zylinder.

Der Vollständigkeit halber sei nochmals erwähnt, dass der Sauerstoffgehalt des Abgasstroms mit klassischen Lambda-Sonden nur im Sammelrohr der Auspuffanlage gemessen werden kann.

In der Regel ist dank der Ablenkeinrichtung selbst an sehr heissen Stellen des Motors eine Wärmebeständigkeit der Sauerstoffsonde bis etwa 1300°C ausreichend. Im erwähnten bevorzugten Messbereich für den Sauerstoffgehalt, dem Eintrittsbereich in die Einzelrohre, liegt die Temperatur in der Regel bei 900 bis 1100°C.

Obwohl resistive keramische Sauerstoffsonden schon bei einer Temperatur von 20°C reagieren, ist eine Anordnung in heissen bis sehr heissen Abgasen vorteilhaft, weil dann die Totzeit nach der Zündung der Gase bis zum Erreichen der Sauerstoffsonde durch die Abgase am geringsten ist und die zur Regelung des Luft-Treibstoffgemisches optimale Dauertemperatur der Sauerstoffsonde für die Einstellung des Sauerstoffgehalts rasch erreicht wird.

Zur weiteren Vereinfachung des Messverfahrens trägt bei, dass eine resistive, ohne Vergleichsatmosphäre arbeitende Sauerstoffsonde neben hohen Temperaturen auch hohen Drücken widersteht, ohne dass die schnelle Ansprechzeit im Millisekundenbereich zu beeinflusst wird.

In bezug auf die Vorrichtung wird die Aufgabe erfindungsgemäss dadurch gelöst, dass eine Sauerstoffsonde mit vom Sauerstoffpartialdruck abhängiger, spezifischer elektischer Leitfähigkeit als dünne Diffusionsschicht aus einem halbleitenden Titanat auf einem kleinen Keramikträger, im Windschatten einer aerodynamischen, stromab wenigstens teilweise offenen Ablenkfläche im Verbrennungsraum des Zylinders, nach dem Austrittsventil in den Zylinderköpfen oder in den Einzel rohren angeordnet ist. Spezielle und weiterbildende Ausführungsformen sind Gegenstand von abhängigen Patentansprüchen.

Die aktive Schicht des Sauerstoffsensors hat vorzugsweise eine flächige Ausdehnung von 0,5 bis 10 $mm^2$ und eine Dicke von 1 bis 20 μm, insbesondere 5 bis 10 μm. Der Auftrag erfolgt vorzugsweise mittels Dünn- oder Dickfilmtechnologie.

Ein Sauerstoffsensor mit kleinen Dimensionen, welcher an sich bekannt ist und auf dem Markt angeboten wird, ist aus mehreren Gründen von wesentlicher Bedeutung:

- Die Sensoreinstellzeit ist abhängig von der Schichtdicke, sie ist umso kürzer, je dünner die Schicht ist.

- Das Strömungsverhalten der Abgase soll durch die Sauerstoffsonde möglichst wenig gestört werden. Dies kann mittels einer Ablenkfläche umso besser realisiert werden, je kleiner der zu schützende Sensor ist. Je näher die Sauerstoffsonde beim Verbrennungsraum angeordnet ist, desto wichtiger sind Strömungsoptimierungen und damit eine wirksame erfindungsgemässe Kombination von Ablenkfläche und Sauerstoffsonde zur Erzeugung einer homogenen Umströmung.

- Kleinere Sauerstoffsonden und damit kleinere Ablenkflächen verursachen weniger Herstellungs- und Montagekosten.

Die proportional zum Partialdruck sauerstoffabsorbierende Diffusionsschicht besteht bevorzugt aus Calcium-, Strontium- oder Bariumtitanat mit an sich bekannten Dotiermaterialien. Das Leitfähigkeitsverhalten in Funktion des Sauerstoffpartialdruck ergibt sich aus einer Konzentrationsänderung atomarer Fehlstellen. Diese elektrische Leitfähigkeit erfordert wegen ihrer direkten Abhängigkeit vom Sauerstoffpartialdruck keine Vergleichsatmosphäre.

Neu eingebaute oder ausgewechselte Sauerstoffsonden haben vorteilhaft eine sauerstoffabsorbierende Diffusionsschicht, welche die im Abgasstrom vorhandenen Verunreinigungen bereits enthält. Damit besteht von allem Anfang an ein Gleichgewicht, was auch bei einer Neubestückung sofort eine optimale Einstellung des Sauerstoffgehalts erlaubt.

Die Sauerstoffsonde und die Ablenkfläche sind vorteilhaft als gemeinsames Einbaumodul ausgestaltet, das fest installiert oder bevorzugt auswechselbar ist.

Die Ablenkfkäche wird aus einem hitzebeständigen und korrosionsfesten Material, das auch abriebfest ist, gebildet, vorzugsweise aus einem metallischen und/oder keramischen Werkstoff, welcher zur Verminderung des Strömungswiderstandes glatt und aerodynamisch geformt ausgebildet ist. Ein z.B. die Ablenkfläche bildendes metallisches, zweckmässig aus einem wärmeleitenden Stahl oder einer Kupferlegierung bestehendes Ablenkblech ist vorzugsweise wärmeleitend mit einem Zylinder, einem Zylinderkopf oder einem Einzelrohr der Auspuffanlage verbunden.

Der Windschatten kann durch mannigfaltige Ausgestaltung der Ablenkfläche variiert werden. Diese kann an die Wandung angelenkt sein und so die glatte aerodynamische Ablenkeinrichtung bilden. Nach weiteren Varianten ist die Wandung nicht Bestandteil der Ablenkeinrichtung, diese ist vorzugsweise als Satteldach, Spitzhut, Halb- bis Dreiviertelkugel oder dgl. ausgebildet.

Die wesentlichsten Vorteile der Erfindung liegen - kurz nochmals zusammengefasst - darin, dass

- eine von einer glatten, aerodynamischen Ablenkeinrichtung geschützte Sauerstoffsonde mit hoher Wärmebeständigkeit und einer Ansprechzeit im Millisekundenbereich eine zylinderselektive Steuerung erlaubt,
- ohne Vergleichsatmosphäre gemessen werden kann, und
- die Wirtschaftlichkeit des Verfahrens verbessert wird.

Die glatte, aerodynamische Ablenkeinrichtung, mit oder ohne Sauerstoffsonde, kann vormontiert oder nachgerüstet werden.

Die Erfindung wird anhand von in der Zeichnung dargestellten Ausführungsbeispielen, welche auch Gegenstand von abhängigen Patentansprüchen sind, näher erläutert. Es zeigen schematisch:

- Fig. 1 eine perspektivische Ansicht einer Auspuffanlage,

- Fig. 2 eine perspektivische Ansicht einer Sauerstoffsonde,

- Fig. 3 ein aufgeschnittenes Einzelrohr mit einer geschützten Sonde,

- Fig. 4 eine aufgeschnittene Seitenansicht von Fig. 3,

- Fig. 5 eine aufgeschnittene Draufsicht auf Fig. 3, und

- Fig. 6 - 9 Varianten von glatten, aerodynamischen Ablenkvorrichtungen mit einer Sauerstoffsonde.

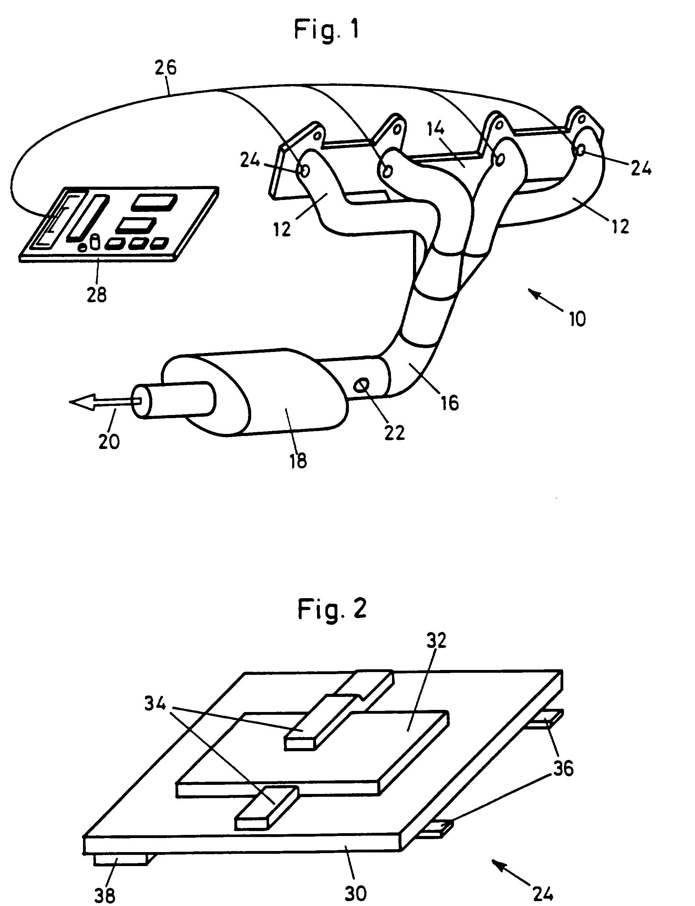

Eine in Fig. 1 dargestellte Auspuffanlage 10 umfasst vier Einzelrohre 12, welche an einen Motorflansch 14 befestigt sind. Die Einzelrohre 12 vereinigen sich zu einem Auspuffkrümmer 16, einem Sammelrohr.

Der Auspuffkrümmer 16 mündet in einen Dreiwege-Katalysator 18, welcher mit einem Wirkungsgrad von etwa 90% mit den im heissen Abgasstrom 20, mit einem Pfeil dargestellt, wegen nicht stöchiometrischer Verbrennung entstandenen Anteilen von Kohlenmonoxid, Stickoxiden und Kohlenwasserstoffen zu unschädlichen Gasen reagiert.

Eine Lambda-Sonde 22 üblicher Bauart wäre im Bereich vor dem Dreiwege-Katalysator 18 angeordnet, wo die Temperatur des Abgasstroms auf wenigstens etwa 800°C, in der Regel etwa 600°C gesunken ist.

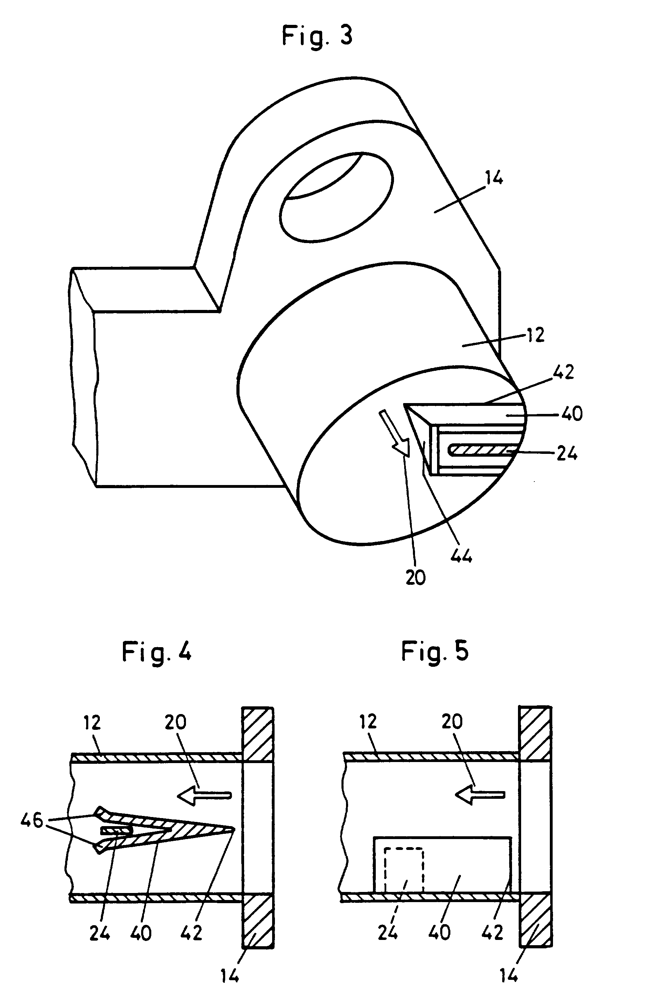

Die Auspuffanlage gemäss Fig. 1 enthält jedoch keine übliche Lambda-Sonde 22, sondern vier, wie in den Fig. 3 bis 9 im Detail gezeigt, durch eine glatte, aerodynamische Ablenkeinrichtung geschützte, resistive keramische Sauerstoffsonden 24 mit hoher Wärmebeständigkeit und zylinderspezifischer Einstellzeit von etwa 5 msec.

Lambda-Sonden 22 üblicher Bauart wären im Bereich der Einzelrohre 12, insbesondere benachbart dem Motorflansch 14, nicht mehr funktionsfähig und würden wegen zu hoher Temperatur zerstört, wenn man sie aus geometrischen Gründen überhaupt einbauen könnte.

Von jedem der vier Sauerstoffsonden 24 führt ein elektrischer Leiter 26 zur Elektronik bzw. elektronischen Schaltung 28, wo die Messignale in Steuer gnale für die nicht dargestellten Gemischaufbereitung und Zündung umgewandelt werden.

Eine Sauerstoffsonde 24 wird in Fig. 2 im Detail gezeigt. Auf einem Keramikträger 30 der Abmessungen ab 5 x 4 x 0,8 mm ist eine dünne Diffusionsschicht aus Strontiumtitanat, der Sauerstoffsensor 32, aufgetragen. Diese im vorliegenden Fall mit Hilfe der Dickfilmtechnologie, insbesondere einer Siebdrucktechnik, hergestellte Diffusionsschicht hat eine Oberfläche von etwa 6 bis 8 mm$^2$ und eine - übertrieben stark gezeichnete - Dicke von etwa 8 bis 10 µm. Ein auf das Aluminiumoxidsubstrat aufgetragenes, feinkörniges Titankeramikpulver wird eingebrannt. Die elektrische Kontaktierung mit der Diffusionsschicht 32 erfolgt über eine dünne Edelmetallbeschichtung, welche vorgängig ebenfalls mittels Siebdrucks aufgebracht wird.

Für die Herstellung einer dünneren Diffusionsschicht 32 kann auch eine an sich bekannte Dünnschichttechnologie angewandt werden.

Der Betriebsstrom der Sauerstoffsonde 24 wird über elektrische Kontakte 34 durch die ihren elektrischen Widerstand in Abhängigkeit des Sauerstoffpartialdrucks wechselnde Diffusionsschicht geleitet. Der Betriebsstrom ist bevorzugt ein Gleichstrom. Bei einem Automotor kann die üblich Fahrzeugbatterie ohne Umwandlungseinheiten als Stromquelle verwendet werden.

Unterhalb des Keramikträgers 30 sind nur ansatzweise gezeigte, mäanderförmig geführte Heizschicht 36 und Temperatursensor 38 ersichtlich. Mit einer vorzugsweise ebenfalls von der Fahrzeugbatterie bezogenen Heizleistung von bis zu 5W kann die Diffusionsschicht 32 durch elektrische Widerstandsheizung auf eine Temperatur von etwa 600°C erwärmt werden. Wie bereits erwähnt, ist dies jedoch bei der vorliegenden Erfindung von untergeordneter Bedeutung, weil die Sauerstoffsonde eine tiefe Ansprechtemperatur hat und in einem Bereich hoher Temperatur angeordnet ist.

Fig. 3 zeigt einen vergrösserten Ausschnitt aus Fig. 1, jedoch mit einem aufgeschnittenen Einzelrohr 12. In der Nähe des Motorflanschs 14, beim Eintritt des Abgasstroms 20 in das Einzelrohr 12, ist ein dachförmig ausgebildetes Leitblech 40 angeordnet, welches die Sauerstoffsonde 24 vor der direkten Einwirkung durch den Abgasstrom 20 schützt und einen Windschatten bildet. Dieser erlaubt eine homogene, aber sich dauernd erneuernde Umspülung der Sauerstoffsonde 24. Der Abschirmeffekt kann durch die Anordnung eines sich bis zum senkrecht zum Rohr verlaufenden First 42 erstreckenden Seitenblechs 44 noch verbessert werden.

Aus den Fig. 4 und 5 ist der durch das dachförmige Ablenkblech 40 verliehene Schutz der Sauerstoffsonde 24 noch besser ersichtlich. Die stromab liegenden Ränder 46 des Ablenkblechs 40 sind nach aussen umgebogen. Dies behindert den Abgasstrom 20 nicht wesentlich, trägt jedoch zu einer homogenen Umströmung der Sauerstoffsonde bei.

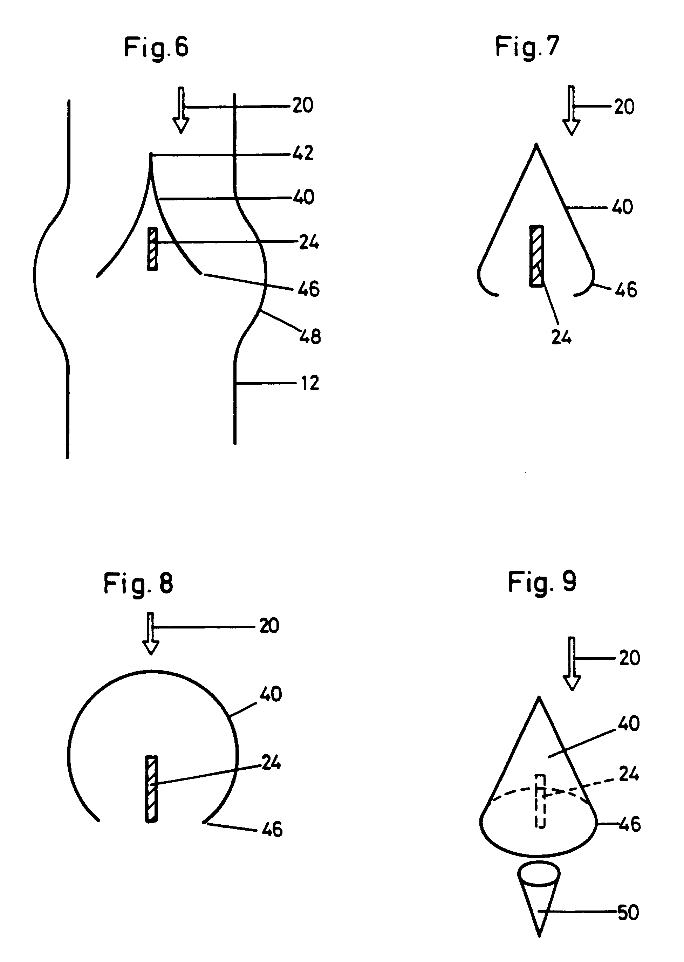

In einem Einzel rohr 12 gemäss Fig. 6 ist ein dachförmig ausgebildetes Ablenkblech 40 für eine Sauerstoffsonde 24 angeordnet, das konkav nach aussen geformt verläuft.

Im Bereich der unteren Ränder 46 des Ablenkblechs 40 weist das Einzel rohr 12 eine Ausbauchung 48 auf. Dadurch kann vermieden werden, dass durch das beidseits verhältnismässig weit ausladende Ablenkblech 40 wegen der Verengung der lichten Weite ein Abgasstau entsteht, welcher die Leistung des Motors vermindern würde.

Im nach Fig. 7 ebenfalls dachförmig ausgebildeten Ablenkblech 40 zur Bildung eines Windschattens für einen Sauerstoffsensor 24 sind die unteren Ränder 46 nach innen eingerollt.

Das Ablenkblech 40 gemäss Fig. 8 ist weitgehend kugelförmig, mit einer stromab liegenden Oeffnung, ausgestaltet.

In Fig. 9 schliesslich ist das Ablenkblech 40 als Spitzhut ausgebildet. Stromab ist ein Gegenstück 50 zum Ablenkblech 40 angeordnet, ebenfalls in Form eines Spitzhuts. Dadurch kann der an sich schon geringe Eingriff in die Strömungsverhältnisse durch die Anordnung eines Ablenkblechs noch vermindert werden. Selbstverständlich können solche Gegenstücke auch bei dachförmig oder anders gestalteten Ablenkblechen ausgebildet sein.

**Patentansprüche**

1. Verfahren zur Regelung des Luft-Treibstoffgemisches in einem Ottomotor mit wenigstens einem Zylinder, insbesondere in einem Automobilmotor, zum optimalen Einsatz eines Katalysators (18) mit einer Sonde, welche der Bestimmung des Luftver-

hältnisses ($\lambda$) in einem heissen Abgasstrom (20) mit Kohlenmonoxid, Stickoxiden und Kohlenwasserstoffen dient, wobei die Messignale der Sonde mit einer Elektronik (28) in Steuersignale für Gemischaufbereitung und Zündung umgewandelt werden,

dadurch gekennzeichnet, dass

der Sauerstoffgehalt des Abgasstroms (20) im Verbrennungsraum der Zylinder, nach dem Austrittsventil in den Zylinderköpfen oder in den daran sich anschließenden Einzelrohren, im Schutzbereich einer glatten, aerodynamischen Ablenkeinrichtung (40) mit einer resistiven keramischen Sauerstoffsonde (24) mit einer Wärmebeständigkeit bis etwa 1300°C und mit einer Einstellzeit im Millisekundenbereich ohne Vergleichsatmosphäre gemessen wird.

2. Verfahren nach Anspruch 1, dadurch gekennzeichnet, dass der Sauerstoffgehalt mit einer Sauerstoffsonde (24) einer Einstellzeit von 1 bis 20 msec, vorzugsweise 3 bis 15 msec, bei einer Temperatur bis 1200°C, vorzugsweise 900 bis l100°C, gemessen wird.

3. Verfahren nach Anspruch 1 oder 2, dadurch gekennzeichnet, dass der Sauerstoffanteil unmittelbar nach der Eintrittsöffnung in die Einzelrohre (12) gemessen wird.

4. Vorrichtung zur Durchführung des Verfahrens nach einem der Ansprüche 1 bis 3 mit einer Sauerstoffsonde zur Regelung des Luft- Treibstoffgemisches in einem Ottomotor und mit einer Elektronik für die Gemischaufbereitung und die Zündung, dadurch gekennzeichnet, dass die Sauerstoffsonde (24) mit vom Sauerstoffpartialdruck abhängiger, spezifischer elektrischer Leitfähigkeit als dünne Diffusionsschicht (32) aus einem halbleitenden Titanat auf einem kleinen Keramikträger (30), im Windschatten einer aerodynamischen, stromab wenigstens teilweise offenen Ablenkfläche (40) im Verbrennungsraum des Zylinders, nach dem Austrittsventil in den Zylinderköpfen oder in den daran sich anschließenden Einzelrohren (12) angeordnet ist.

5. Vorrichtung nach Anspruch 4, dadurch gekennzeichnet, dass die sauerstoffabsorbierende Diffusionsschicht, die Sensorschicht (32) aus Calcium-, Strontium- oder Bariumtitanat besteht, eine flächige Ausdehnung von 0,5 bis 10 mm² und eine Dicke von vorzugsweise 1 bis 20 $\mu$m, insbesondere 5 bis 10 $\mu$m, hat.

6. Vorrichtung nach Anspruch 4 oder 5, dadurch gekennzeichnet, dass die sauerstoffabsorbierende Diffusionsschicht (32) einer neu eingebauten oder ausgewechselten Sauerstoffsonde (24) die im Abgasstrom (20) vorhandenen Verunreinigungen in Gleichgewichtskonzentration enthält.

7. Vorrichtung nach einem der Ansprüche 4 bis 6, dadurch gekennzeichnet, dass die Sauerstoffsonde (24) mit einem Heizmäander (36) und/oder einem Temperatursensor (38) ausgerüstet ist.

8. Vorrichtung nach einem der Ansprüche 4 bis 7, dadurch gekennzeichnet, dass Sauerstoffsonde (24) und Ablenkfläche (40) als gemeinsames Einbaumodul ausgestaltet sind.

9. Vorrichtung nach einem der Ansprüche 4 bis 8, dadurch gekennzeichnet, dass die Ablenkfläche (40) aus einem hitzebeständigen, korrosionsfesten Metallblech besteht und unmittelbar nach der Eintrittsöffnung wärmeleitend mit einem Einzelrohr (12) der Auspuffanlage (10) verbunden ist.

10. Vorrichtung nach einem der Ansprüche 4 bis 9, dadurch gekennzeichnet, dass die Ablenkfläche (40) dachförmig ausgebildet mit etwa senkrecht zur Rohrachse verlaufendem First (42) verläuft, auch mit konkav verlaufenden Dachflächen, oder als Spitzhut oder als Halb- bis Dreiviertelkugel ausgebildet ist, wobei die stromab liegenden Ränder (46) auch nach innen oder nach aussen umgebogen sind.

**Claims**

1. Method for regulation of the air/fuel mixture in an Otto engine with at least one cylinder, in particular in an automobile engine, for optimum use of a catalytic converter (18) with a probe which serves to determine the air ratio ($\lambda$) in a hot exhaust stream (20) with carbon monoxide, nitrogen oxides and hydrocarbons, wherein the measurement signals of the probe are converted with an electronic device (28) to control signals for mixture preparation and ignition, characterised in that the oxygen content of the exhaust stream (20) is measured in the combustion chamber of the cylinders, behind the exhaust valve in the cylinder heads, or in the adjoining individual pipes, in the region of protection of a smooth aerodynamic baffle device (40) with a resistive ceramic oxygen probe (24) having a thermal stability up to about 1300°C and having an adjusting time in the region of milliseconds without a reference atmosphere.

2. Method according to claim 1, characterised in that the oxygen content is measured with an oxygen probe (24) with an adjusting time of 1 to 20 ms, preferably 3 to 15 ms, at a temperature up to 1200°C,

3. Method according to claim 1 or 2, characterised in that the oxygen fraction is measured immediately behind the inlet opening into the individual pipes (12).

4. Device for carrying out the method according to any of claims 1 to 3 with an oxygen probe for regulation of the air/fuel mixture in an Otto engine and with an electronic device for mixture preparation and ignition, characterised in that the oxygen probe (24) with specific electrical conductivity dependent on the oxygen partial pressure as a thin diffusion layer (32) of semiconducting titanate on a small ceramic support (30), in the lee of an aerodynamic baffle surface (40) which is at least partially open downstream is arranged in the combustion chamber of the cylinder, behind the exhaust valve in the cylinder heads or in the adjoining individual pipes (12).

5. Device according to claim 4, characterised in that the oxygen-absorbing diffusion layer, the sensor layer (32), is made of calcium, strontium or barium titanate and has a planar extent of 0.5 to 10 mm$^2$ and a thickness of preferably 1 to 20 $\mu$m, particularly 5 to 10 $\mu$m.

6. Device according to claim 4 or 5, characterised in that the oxygen-absorbing diffusion layer (32) of a newly fitted or exchanged oxygen probe (24) contains the impurities present in the exhaust stream (20) in equilibrium concentration.

7. Device according to any of claims 4 to 6, characterised in that the oxygen probe (24) is equipped with a heating coil (36) and/or a temperature sensor (38).

8. Device according to any of claims 4 to 7, characterised in that oxygen probe (24) and baffle surface (40) are constructed as a common fitted module.

9. Device according to any of claims 4 to 8, characterised in that the baffle surface (40) consists of a heat-stable, corrosion-resistant metal plate and immediately behind the inlet opening is connected in heat-conducting relationship to an individual pipe (12) of the exhaust system (10).

10. Device according to any of claims 4 to 9, characterised in that the baffle surface (40) is roof-shaped with a ridge (42) extending more or less perpendicularly to the pipe axis, also with concavely extending roof surfaces, or is constructed as a pointed hat or as a half to three-quarter sphere, wherein the downstream edges (46) are also bent inwardly or outwardly.

**Revendications**

1. Procédé de réglage du mélange air-combustible dans un moteur du type Otto avec au moins un cylindre, spécialement d'un moteur pour véhicule automobile, permettant l'utilisation optimale d'un catalyseur (18) équipé d'une sonde déstinée à mesurer le taux ($\lambda$) dans le flux chaud de gaz d'échappements contenant du monoxyde de carbone, des oxydes d'azote et des hydrocarbures, les signaux de mesure fournis par la sonde étant transformés en signaux de commande par une électronique (28) pour la gérance du mélange de combustion et de l'allumage,

caractérisé en ce que

le taux de d'oxygène du flux de gaz d'échappement (20) dans la chambre de combustion des cylindres, après la valve de refoulement des têtes de cylindre ou dans les tubes individuels qui les suivent est mesuré sans atmosphère de comparaison, par une sonde d'oxygène résistive en céramique (24) résistant à des températures jusqu'à environ 1300°C et possédant un temps de réaction dans le domaine de la milliseconde, sise à l'abri d'un déflecteur (40) lisse et de forme aérodynamique.

2. Procédé selon revendication 1, caractérisé en ce que le taux d'oxygène est mesuré avec une sonde d'oxygène (24) dont le temps de réaction peut être réglé entre 1 et 20 msec, de préférence entre 3 et 15 msec à une température jusqu'à 1200°C, de préférence entre 900 et 1100°C.

3. Procédé selon revendication 1 ou 2, caractérisé en ce que le taux d'oxygène est mesuré immédiatement après l'ouverture d'admission dans les tubes individuels (12)

4. Dispositif déstiné à l'utilisation des procédés selon les revendications 1 à 3 possédant une sonde d'oxygène pour le réglage du mélange air-combustible d'un moteur du type Otto et une électronique pour le traitement du mélange et de l'allumage, caractérisé en ce que la sonde d'oxygène (24) dont la conductibilité est fonction de la pression partielle de l'oxygène, est une couche de diffusion (32) mince faite d'un titanat semiconducteur monté sur un petit support de céramique (30), la sonde étant placée, à l'abri d'un déflecteur (40) de forme aérodynamique et au moins partiellement ouvert en aval, dans la chambre de combustion des cylindres, après la valve dé refoulement des têtes de cylindre ou dans les tubes individuels (12) directement attachés.

5. Dispositif selon revendication 4, caractérisé en ce que la couche de diffusion absorbant l'oxygène, le senseur d'oxygène lui même (32), est faite en titanat de calcium, de strontium ou de barium et possède une surface de projection de 0,5 à 10 mm2 et une épaisseur préférencielle de 1 à 20 μm, spécialement de 5 à 10μm.

6. Dispositif selon revendication 4 ou 5, caractérisé en ce que la couche de diffusion absorbant l'oxygène (32) d'une sonde d'oxygène (24) montée à l'état neuf ou échangée comme pièce de rechange recèle des impuretés déjà présentes dans le flux de gaz d'échappement dans une concentration identique et en équilibre avec celles du flux.

7. Dispositif selon l'une des revendications 4 à 6, caractérisé en ce que la sonde d'oxygène (24) est équipée avec un chauffage à filaments (36) et/ou avec un senseur de température (38).

8. Dispositif selon l'une des revendications 4 à 7, caractérisé en ce que la sonde d'oxygène (24) et le déflecteur (40) forment un module de montage commun.

9. Dispositif selon l'une des revendications 4 à 8, caractérisé en ce que le déflecteur (40) est fait en tôle d'un métal non corrosif et à haute résistance à la chaleur et qu'il est relié, immédiatement après l'ouverture d'admission, de façon à conduire la chaleur, au tube individuel (12) du système d'échappement (10)

10. Dispositif selon l'une des revendications 4 à 9, caractérisé en ce que le déflecteur (40) est fait en forme de toit avec un faîtage (42) évoluant à peu près perpendiculairement par rapport à l'axe du tube, mais également avec des surfaces de toiture concaves ou en forme de chapeau pointu ou en forme d'une moitié au tiers de sphère, les bords (46) situés en aval pouvant aussi être courbés vers l'intérieur ou vers l'extérieur.

# Fig. 1

# Fig. 2

## Fig. 3

## Fig. 4

## Fig. 5

Fig.6

Fig.7

Fig. 8

Fig. 9